# EUROPEAN PATENT SPECIFICATION

(11) **EP 4 056 914 B1**
(45) Date of publication and mention of the grant of the patent: **21.02.2024**
(21) Application number: 20889784.3
(22) Date of filing: 16.11.2020
(51) Int. Cl.: F24F 11/65, F24F 11/77

(54) **AIR CONDITIONING SYSTEM**
KLIMATISIERUNGSSYSTEM
SYSTÈME DE CLIMATISATION

(30) Priority: 22.11.2019 JP 2019211361
(43) Date of publication of application: 14.09.2022
(73) Proprietor: Daikin Industries, Ltd., Osaka-shi, Osaka 530-0001 (JP)
(72) Inventor: TAKENAKA, Kei, Osaka-shi, Osaka 530-8323 (JP); NUNO, Hayato, Osaka-shi, Osaka 530-8323 (JP); ITOU, Hiroshi, Osaka-shi, Osaka 530-8323 (JP); TSUTSUMI, Tomohiko, Osaka-shi, Osaka 530-8323 (JP); UGAI, Kouji, Osaka-shi, Osaka 530-8323 (JP)
(74) Representative: Hoffmann Eitle
(86) International application number: PCT/JP2020/042652
(87) International publication number: WO 2021/100664

(56) References cited:
- EP-A1- 2 944 890
- WO-A1-2018/191699
- JP-A- H1 123 028
- JP-A- H01 300 130
- JP-A- H11 351 645
- JP-A- 2000 291 997
- JP-A- 2004 101 116
- US-A1- 2008 110 187
- US-A1- 2009 308 941

## Description

### TECHNICAL FIELD

Embodiments disclosed herein relate to an air-conditioning system configured to carry out a ventilating operation, on the basis of a concentration of a predetermined gas in a room.

### BACKGROUND ART

Some known air conditioners are configured to ventilate a room in accordance with the concentration of carbon dioxide gas in the room to keep the carbon dioxide gas concentration appropriate in the room. JP 2005-221107 A discloses an air conditioner configured to automatically reduce the volume of air provided by a ventilation fan in a sound-reduced time period, for example, in the nighttime. EP 2 944 890 A1, forming the basis for the preamble of claim 1, relates to an air conditioning system comprising a ventilator, a remote controller and a carbon dioxide sensor. The ventilator increases ventilation in case a carbon dioxide concentration above a threshold is detected. JP 2004-101116 A describes an air conditioner controlling ventilation according to conditions detected by humidity and gas concentration sensors.

### SUMMARY OF THE INVENTION

### <Technical Problem>

As to an air conditioner system having a ventilation function, however, even Patent Literature 1 has no adequate description about how to control an air-conditioning operation other than ventilation and a ventilating operation in a combined manner.

### <Solution to Problem>

A first aspect is directed to an air-conditioning system including a ventilation fan, a control unit, and an operation terminal. The ventilation fan is configured to ventilate a room. The control unit is configured to control the ventilation fan. The operation terminal is configured to receive from a user a start instruction of an air-conditioning operation including at least one of an automatic air-conditioning operation, a cooling operation, a heating operation, a dehumidifying operation, a humidifying operation, and an air blowing operation, and to receive a start instruction of a ventilating operation by the ventilation fan. The control unit has a forced ventilation mode, in which, in a non-operation period before the operation terminal receives a start instruction of the air-conditioning operation and before the air-conditioning operation is started, when a concentration of a predetermined gas in theroom would reach a value equal to or more than a predetermined value, a forced ventilation, in which the ventilation fan is controlled to ventilate the room to reduce the concentration, automatically starts. The control unit continues the forced ventilation mode, even when the control unit receives a start instruction of the air-conditioning operation, and/or the control unit continues the forced ventilation mode, even when the control unit receives a stop instruction of the air-conditioning operation.

In the air-conditioning system according to the first aspect, even when another air-conditioning operation starts or stops, the control unit carries out the forced ventilation of ventilating the room in accordance with the concentration of the predetermined gas in the room. Therefore, the concentration of the predetermined gas in the room is kept at a certain level or less.

A second aspect is directed to the air-conditioning system according to the first aspect, in which the control unit in the forced ventilation mode carries out the air-conditioning operation on condition that the operation terminal receives the operation start instruction.

In the air-conditioning system according to the second aspect, when the operation terminal receives an instruction to start another air-conditioning operation in the forced ventilation, the control unit starts the other air-conditioning operation. Therefore, a user still feels comfortable even during the forced ventilation.

A third aspect is directed to the air-conditioning system according to the first or second aspect, in which the control unit continues the forced ventilation even upon reception of the air-conditioning operation stop instruction.

In the air-conditioning system according to the third aspect, even when another air-conditioning operation stops, the control unit carries out the forced ventilation of ventilating the room in accordance with the concentration of the predetermined gas in the room. Therefore, the concentration of the predetermined gas in the room is kept at a certain level or less.

A fourth aspect is directed to the air-conditioning system according to any of the first to third aspects, in which the ventilation fan ventilates the room by supplying outside air into the room.

A fifth aspect is directed to the air-conditioning system according to any of the first to fourth aspects, further including a notification unit. The control unit causes the notification unit to notify the user of the continuation of the forced ventilation on condition that the operation terminal receives the operation start instruction.

A sixth aspect is directed to the air-conditioning system according to any of the first to fifth aspects, in which the operation terminal includes a stop button to be pressed once for stopping the air-conditioning operation. The forced ventilation is continued even after the press of the stop button once.

A seventh aspect is directed to the air-conditioning system according to any of the first to sixth aspects, further including a gas sensor configured to measure the concentration of the predetermined gas in the room.

### BRIEF DESCRIPTION OF THE DRAWINGS

FIG. 1 is a schematic diagram of an air-conditioning system 100 according to a first embodiment.
FIG. 2 is a diagram of a refrigerant circuit 2 and a ventilation path 3 in an air conditioner 1 according to the first embodiment.
FIG. 3 is a block diagram of a control configuration according to the first embodiment.
FIG. 4A is a diagram of an operation terminal 60 according to the first embodiment in a state in which a cover 602 disposed on a lower side of the operation terminal 60 is closed.
FIG. 4B is a diagram of the operation terminal 60 according to the first embodiment in a state in which the cover 602 disposed on the lower side of the operation terminal 60 is open.
FIG. 5 is a timing chart of control by the air conditioner 1 in a forced ventilation mode according to the first embodiment.
FIG. 6A is a diagram of a front surface of an operation terminal 60a according to Modification 1A.
FIG. 6B is a diagram of a rear surface of the operation terminal 60a according to Modification 1A in a state in which a cover covering the entire rear surface is removed from the operation terminal 60a.
FIG. 7 is a schematic diagram of an air-conditioning system 100a according to Modification 1C.
FIG. 8 is a schematic diagram of an air-conditioning system 100b according to Modification 1D.
FIG. 9 is a schematic diagram of an air-conditioning system 100c according to Modification 1E.
FIG. 10 is a schematic diagram of an air-conditioning system 100d according to Modification 1F.

### DESCRIPTION OF EMBODIMENTS

### <First Embodiment>

### (1) General Configuration of Air Conditioning System 100

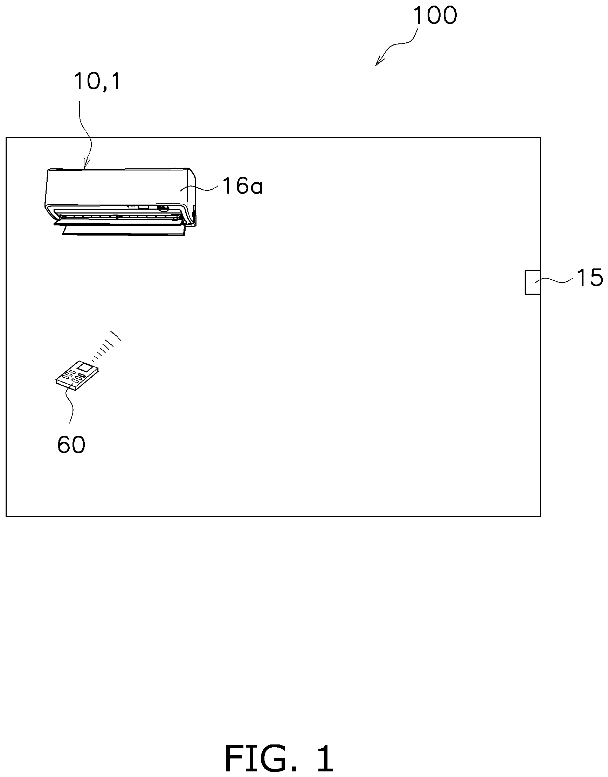

As illustrated in a schematic diagram of FIG. 1, an air-conditioning system 100 according to a first embodiment includes an air conditioner 1 and a gas sensor 15.

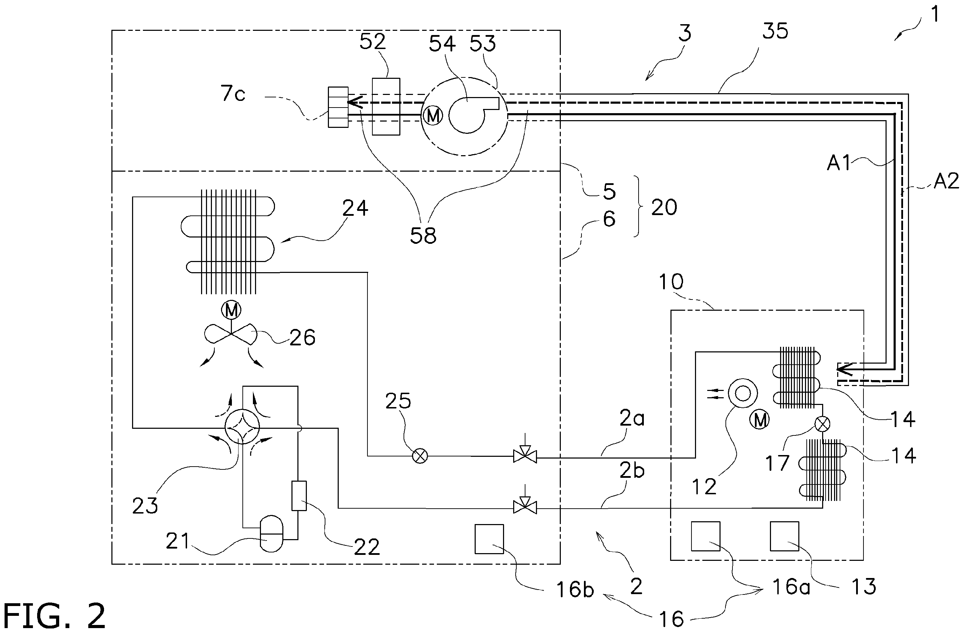

As illustrated in FIG. 2, the air conditioner 1 includes an indoor unit 10, an outdoor unit 20, a refrigerant pipe 2a, a refrigerant pipe 2b, a ventilation pipe 35, a control unit 16, and an operation terminal 60. The refrigerant pipe 2a, the refrigerant pipe 2b, and the ventilation pipe 35 connect the indoor unit 10 and the outdoor unit 20. The indoor unit 10, the outdoor unit 20, the refrigerant pipe 2a, the refrigerant pipe 2b, the ventilation pipe 35, the control unit 16, and the operation terminal 60 constitute a refrigerant circuit 2 and a ventilation path 3.

As illustrated in FIG. 1, the gas sensor 15 and the indoor unit 10 of the air conditioner 1 are installed in the same room. The gas sensor 15 is connected to the control unit 16 of the air conditioner 1 in a wired or wireless manner.

The indoor unit 10 includes an indoor heat exchanger 14, an indoor expansion valve 17, and an indoor fan 12. The indoor unit 10 is installed in the room.

The outdoor unit 20 includes an outdoor refrigerant circuit unit 6 and a ventilation unit 5. The outdoor unit 20 is installed outside the room. Typically, the outdoor unit 20 is installed outdoors.

The outdoor refrigerant circuit unit 6 includes a compressor 21, an accumulator 22, a four-way switching valve 23, an outdoor heat exchanger 24, an outdoor expansion valve 25, and pipes connecting these components to one another. The outdoor unit 20 also includes an outdoor heat exchanger fan 26.

The air conditioner 1 according to the first embodiment is capable of carrying out an air-conditioning operation involving, for example, air cooling, air heating, dehumidification, and ventilation for the room where the indoor unit 10 is installed.

The air conditioner 1 according to the first embodiment carries out a cooling operation and a heating operation, using the refrigerant circuit 2. The air conditioner 1 switches between the cooling operation and the heating operation in such a manner that the four-way switching valve 23 changes a refrigerant flowing direction.

During the cooling operation, when the refrigerant is discharged from the compressor 21, then the refrigerant flows through the four-way switching valve 23, the outdoor heat exchanger 24, the outdoor expansion valve 25, the indoor heat exchanger 14, the four-way switching valve 23, and the accumulator 22 in this order. Thereafter, the refrigerant is sucked into the compressor 21 again. During the cooling operation, the outdoor heat exchanger 24 functions as a radiator to heat outside air, while the indoor heat exchanger 14 functions as an evaporator to cool indoor air.

During the heating operation, when the refrigerant is discharged from the compressor 21, then the refrigerant flows through the four-way switching valve 23, the indoor heat exchanger 14, the outdoor expansion valve 25, the outdoor heat exchanger 24, the four-way switching valve 23, and the accumulator 22 in this order. Thereafter, the refrigerant is sucked into the compressor 21 again. During the heating operation, the indoor heat exchanger 14 functions as a radiator to heat indoor air, while the outdoor heat exchanger 24 functions as an evaporator to cool outside air.

The ventilating operation is an air-supplying operation or an exhausting operation. During the air-supplying operation, air is provided in a direction A1 as illustrated in FIG. 2. In other words, outside air is supplied into the room. During the exhausting operation, air is provided in a direction A2 as illustrated in FIG. 2. In other words, indoor air is exhausted from the room. Switching between the air-supplying operation and the exhausting operation is made by a damper 53. The air conditioner 1 carries out the ventilating operation, using the ventilation path 3. The ventilation path 3 includes the ventilation pipe 35, the indoor unit 10, and a ventilation path 58 and a ventilation fan 54 of the outdoor unit 20.

### (2) Specific Configuration of Air Conditioning System 100

### (2-1) Outdoor unit 20

As described in "(1) General Configuration of Air Conditioning System 100" above, the outdoor unit 20 includes the ventilation unit 5 and the outdoor refrigerant circuit unit 6. The outdoor refrigerant circuit unit 6 has already been described in "(1) General Configuration of Air Conditioning System 100" above; therefore, the description thereof will not be given below. In the following, the ventilation unit 5 is mainly described.

### (2-1-1) Ventilation unit 5

The air conditioner 1 according to the first embodiment is capable of carrying out the ventilating operation, using the ventilation unit 5.

The ventilation unit 5 includes the ventilation path 58 in the ventilation unit 5. The ventilation path 58 in the ventilation unit 5 constitutes a part of the entire ventilation path 3.

The ventilation unit 5 includes the damper 53, a heater 52, and the ventilation fan 54.

The damper 53 is configured to switch between the air-supplying operation and the exhausting operation.

The air-supplying operation or the exhausting operation is carried out by rotating the ventilation fan 54. The following describes the air-supplying operation. The ventilation fan 54 rotates to provide air that is taken into the ventilation unit 5 through an air intake port 7c for ventilation in a casing of the ventilation unit 5. The air then passes through the ventilation path 58 and reaches the ventilation pipe 35 connecting the outdoor unit 20 and the indoor unit 10. When the air reaches the indoor unit 10 through the ventilation pipe 35, then the air is supplied into the room from the indoor unit 10. In the exhausting operation, on the contrary, indoor air is exhausted from the room to the outside via the indoor unit 10, the ventilation pipe 35, the ventilation path 58, and the air intake port 7c for ventilation.

The heater 52 is used during the air-supplying operation. In the air-supplying operation, when a humidity in the ventilation pipe 35 is high, condensation occurs in the ventilation pipe 35, so that a collision of dew water with outside air to be supplied may generate abnormal noise. In order to prevent generation of such abnormal noise, a drying operation is occasionally carried out for drying the inside of the ventilation pipe 35. During the drying operation, the heater 52 is configured to heat air introduced from the outside.

### (2-2) Indoor unit 10

The indoor unit 10 includes the indoor heat exchanger 14, the indoor expansion valve 17, the indoor fan 12, a first control unit 16a, and a buzzer 13.

The buzzer 13 is capable of sounding a warning. For example, the buzzer 13 is capable of sounding a warning when the control unit 16 receives an input to the operation terminal 60 by the user.

### (2-3) Ventilation pipe 35

The ventilation pipe 35 connects the indoor unit 10 and the outdoor unit 20 (specifically, the ventilation unit 5). The ventilation pipe 35 constitutes a part of the ventilation path 3.

### (2-4) Control unit 16

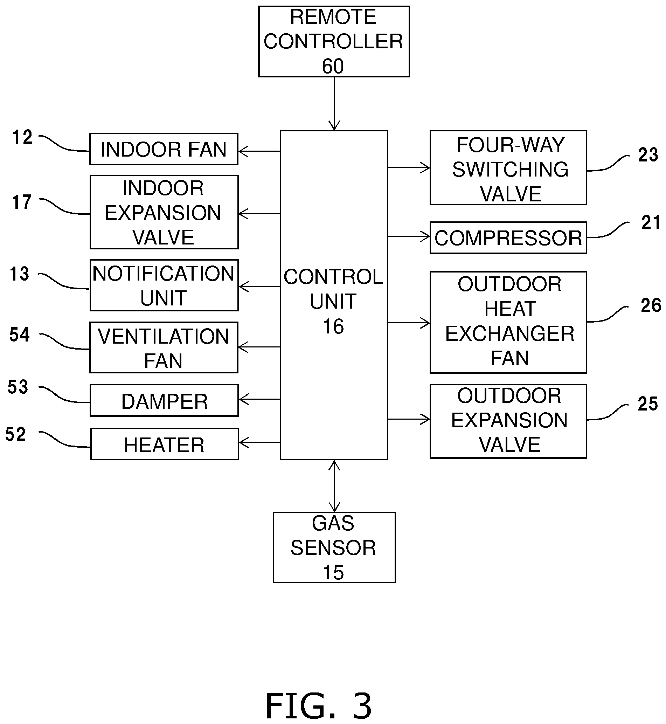

The control unit 16 includes the first control unit 16a and a second control unit 16b. The first control unit 16a is disposed in the indoor unit 10. The second control unit 16b is disposed in the outdoor unit 20. The first control unit 16a and the second control unit 16b cooperate to serve as the control unit 16 for controlling the respective components of the air conditioner 1. The control unit 16 may be constituted of one of the first control unit 16a and the second control unit 16b, and one of the first control unit 16a and the second control unit 16b may be configured to control all the components. Each of the first control unit 16a and the second control unit 16b is practicable using a computer. Each of the first control unit 16a and the second control unit 16b includes a central processing unit (CPU) and a storage unit. FIG. 3 is a block diagram of a schematic control configuration of the control unit 16. The control unit 16 controls the air-conditioning operation involving, for example, the heating operation, the cooling operation, and the ventilating operation to be carried out by the air conditioner 1. The control unit 16 controls the indoor fan 12, the four-way switching valve 23, the compressor 21, the outdoor heat exchanger fan 26, the outdoor expansion valve 25, the ventilation fan 54, a humidifying rotor 51, the heater 52, an adsorption fan 59, the indoor expansion valve 17, the gas sensor 15, and the operation terminal 60. The control unit 16 receives data on a gas concentration from the gas sensor 15, for controlling the air-conditioning operation. The control unit 16 receives from the operation terminal 60 a control instruction which the user has input, and controls the air-conditioning operation.

The first control unit 16a is disposed on a right end side in a casing 11 of the indoor unit 10. However, the control unit 16a may be disposed at any position.

### (2-5) Gas sensor 15

As illustrated in FIG. 1, the air-conditioning system 100 according to the first embodiment includes the indoor unit 10 and the gas sensor 15 that are separate from each other. The gas sensor 15 is a carbon dioxide (CO₂) gas sensor. Therefore, the CO₂ gas sensor 15 measures a concentration of CO₂ gas in the room. When the concentration of the CO₂ gas is high, outside air is taken into the room via the ventilation path 3 to reduce the concentration of the CO₂ gas in the room. For example, this is effective in a case where the cooling operation or the heating operation is carried out without exchange of air in the room, and other cases.

The gas sensor 15 is an optical gas sensor. The gas sensor 15 includes a light emitter and a light receiver. The light emitter includes a light source configured to emit infrared light. The light receiver includes a detector and a filter. The principle of the gas sensor is a non-dispersive infrared absorption method (NDIR). The volume of gas is determined on the basis of the principle that resonance of molecular energy by interatomic vibration causes absorption of light in a frequency (wavelength) specific to gas molecules. The gas sensor may alternatively be of a self-heating thermistor type.

The gas sensor 15 is capable of communicating with the first control unit 16a of the indoor unit 10 in a wireless manner. The gas sensor 15 may communicate with the first control unit 16a of the indoor unit 10 in a wired manner. The gas sensor 15 is configured to measure a concentration of a predetermined gas in the room. The gas sensor 15a transmits a result of the measurement to the first control unit 16a. The control unit 16 controls the ventilating operation by the air conditioner 1, using the measurement result received at the first control unit 16a.

### (2-6) Operation terminal 60

The air conditioner 1 includes the operation terminal 60. The operation terminal 60 according to the first embodiment is a remote controller to be exclusively used for the air conditioner 1. The operation terminal 60 may be a general-purpose mobile terminal such as a smartphone. The operation terminal 60 is separate from the indoor unit 10. The operation terminal 60 is capable of communicating with the first control unit 16a in a wireless manner. The operation terminal 60 transmits to the first control unit 16a a control instruction which the user has input.

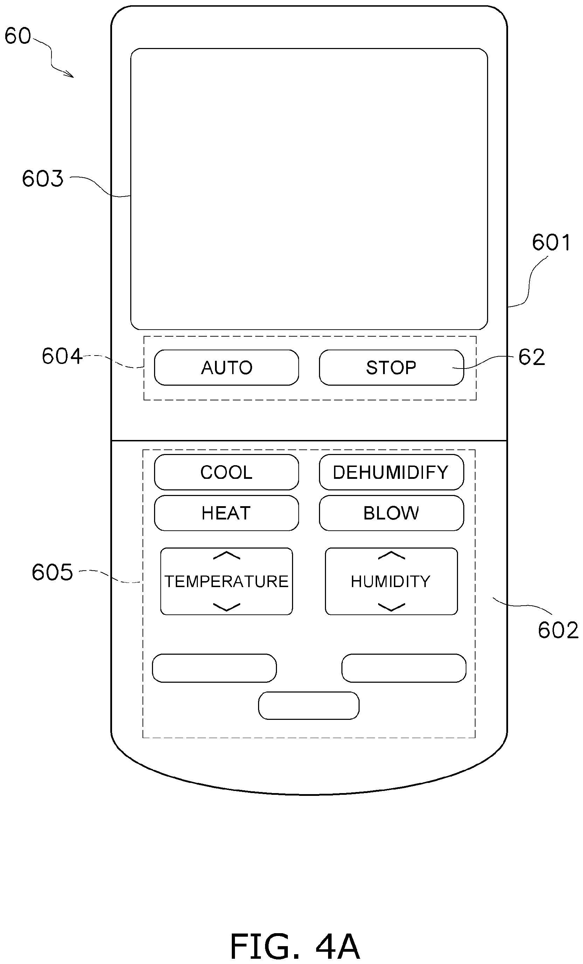

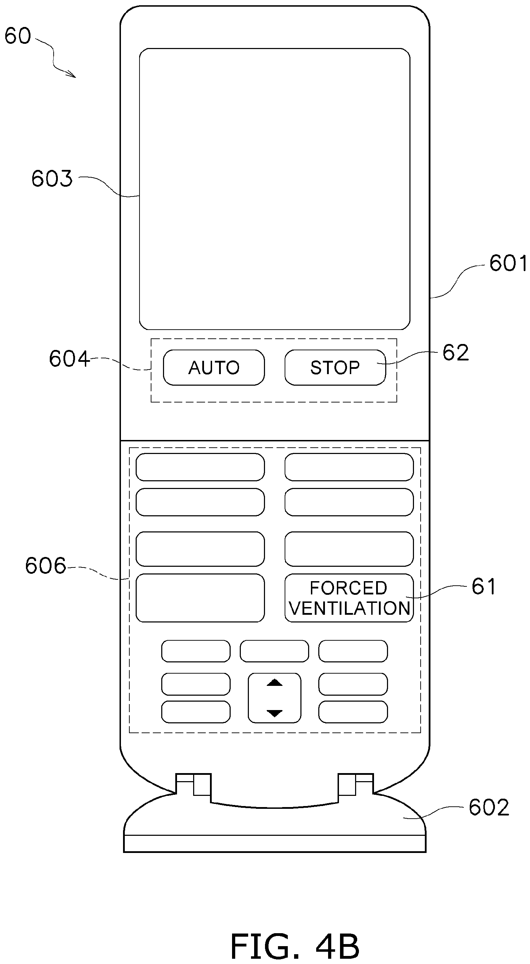

The operation terminal 60 includes a main body 601 and a cover 602. FIG. 4A illustrates a state in which the cover 602 is closed. FIG. 4B illustrates a state in which the cover 602 is open. The cover 602 is disposed to cover a lower side of the main body 601. Normally, the operation terminal 60 is used with the cover 602 closed. The operation terminal 60 also includes a display unit 603 and an operation button 604 each disposed on an upper side of the main body 601.

The display unit 603 displays an operating status of the air conditioner 1, an indoor temperature, and the like.

The operation button 604 is operable irrespective of whether the cover 602 is closed or open. The operation button 604 includes a start button for starting an automatic operation and a stop button 62 for stopping the cooling operation, the heating operation, the dehumidifying operation, and the air blowing operation. The automatic operation means that, in carrying out the air-conditioning operation, the control unit 16 automatically selects the heating operation, the cooling operation, or the like in accordance with a current room temperature and the like. In this description, with regard to the air-conditioning operation to be carried out by the air conditioner 1, an air-conditioning operation excluding a forced ventilation (to be defined later) is occasionally called a normal air-conditioning operation. The normal air-conditioning operation includes the automatic operation, the cooling operation, the heating operation, the dehumidifying operation, the air blowing operation, the humidifying operation, and the ventilating operation excluding the forced ventilation. The stop button 62 is configured to stop the normal air-conditioning operation.

The operation terminal 60 also includes an operation button 605 disposed on the cover 602. The operation button 605 is operable in the state in which the cover 602 is closed. The operation button 605 includes start buttons for starting the cooling operation, the heating operation, the dehumidifying operation, and the air blowing operation, a temperature setting button, a humidity setting button, and the like. The user presses the operation button 605, such as "COOL", "HEAT", "DEHUMIDIFY", or "BLOW", to issue an operation start instruction to start the cooling operation, the heating operation, the dehumidifying operation, or the air blowing operation.

As illustrated in FIG. 4B, the operation terminal 60 also includes an operation button 606 that is operable in the state in which the cover 602 is open. The operation button 606 is not operable until the cover 602 is opened. The operation button 606 includes an operation button 61 for starting or stopping the forced ventilation mode. The term "forced ventilation" as used herein refers to an operation of actually ventilating the room by rotating the ventilation fan 54. The term "forced ventilation mode" as used herein refers to, including an operation standby state, a state in which the control unit 16 automatically carries out the forced ventilation when a forced ventilation start condition (in the first embodiment, a condition that the concentration of the predetermined gas has a value equal to or more than a predetermined value) is satisfied. In a state in which the control unit 16 is not in the forced ventilation mode, the user presses the operation button 61 to put the control unit 16 into the forced ventilation mode. On the other hand, in a state in which the control unit 16 is in the forced ventilation mode, the user presses the operation button 61 to clear the forced ventilation mode.

### (3) Forced ventilating operation mode

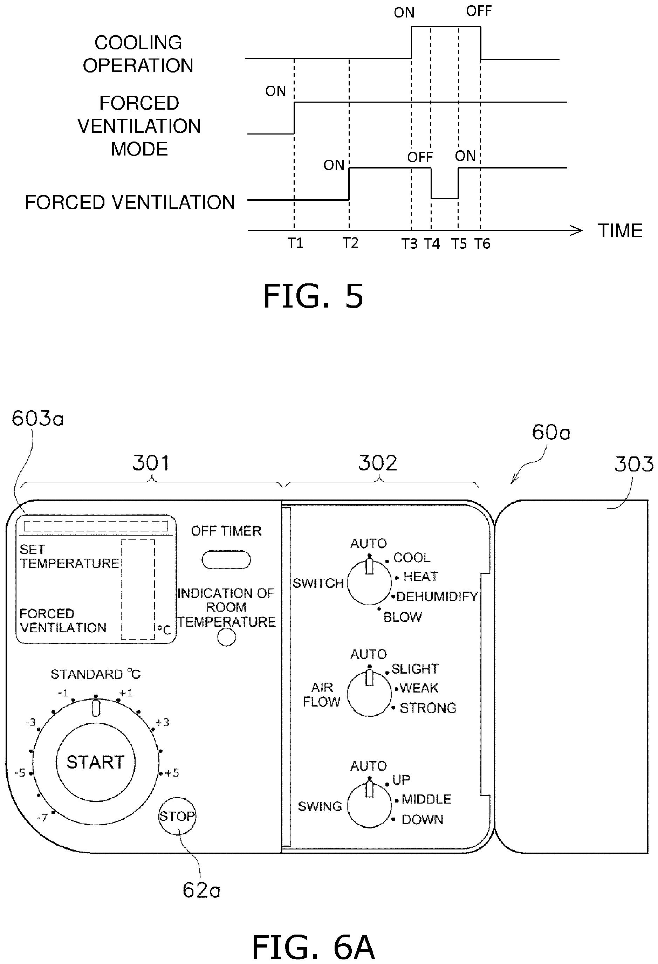

With reference to a timing chart of FIG. 5, next, a description will be given of the forced ventilation mode according to the first embodiment.

The air conditioner 1 according to the first embodiment is configured to carry out the forced ventilation in addition to the normal air-conditioning operation including the cooling operation, the heating operation, the dehumidifying operation, the air blowing operation, and the like.

The forced ventilation refers to an automatic operation to be carried out by the control unit 16 in the forced ventilation mode.

When the user presses the operation button 61, indicating "FORCED VENTILATION", on the operation terminal 60, the operation terminal 60 sends the user's instruction to the control unit 16 to put the control unit 16 into the forced ventilation mode (see time T1 in FIG. 5). Alternatively, the forced ventilation mode may be set prior to the shipment at the factory, and the control unit 16 may be set into the forced ventilation mode unless the user presses the operation button 61 to clear the forced ventilation mode.

The control unit 16 according to the first embodiment continuously or intermittently monitors the concentration of the predetermined gas in the room. Specifically, the gas sensor 15 measures the concentration of the predetermined gas in the room and transmits a result of the measurement to the control unit 16 on a regular basis. In the forced ventilation mode, the control unit 16 starts the forced ventilation when the concentration of the predetermined gas in the room exceeds the predetermined value (see time T2 and time T5 in FIG. 5).

The predetermined gas according to the first embodiment is carbon dioxide (CO₂) gas. The gas sensor 15 according to the first embodiment is a CO₂ gas sensor. The gas sensor 15 measures the concentration of the CO₂ gas and transmits a result of the measurement to the control unit 16. The control unit 16 starts the forced ventilation when the acquired concentration of the CO₂ gas has a value equal to or more than the predetermined value (see time T2 and time T5 in FIG. 5). In Japan, a CO₂ gas concentration in the open air is about 410 ppm (measured in 2018). For example, when the measured concentration of the CO₂ gas has a value equal to or more than the predetermined value set at 1000 ppm, the control unit 16 starts the forced ventilation.

In the case of, for example, the air-supplying operation, the forced ventilation is carried out by rotating the ventilation fan 54 to introduce outside air into the room via the ventilation path 3.

The forced ventilation is continued unless the concentration of the predetermined gas in the room has a value equal to or less than the predetermined value. In the case where the predetermined gas is the CO₂ gas, the control unit 16 terminates the forced ventilation when the concentration of the CO₂ gas in the room is reduced to, for example, 700 ppm or less (see time T4 in FIG. 5).

As illustrated in FIG. 5, in the forced ventilation mode, when the user presses the operation button 605 for starting the cooling operation at time T3, the air conditioner 1 carries out the cooling operation. Also in this case, the forced ventilation mode is continued without being cleared.

As illustrated in FIG. 5, next, it is assumed that at time T6, the user presses the operation button 604 for stopping the cooling operation. In this case, the air conditioner 1 stops the cooling operation. However, the forced ventilation mode is continued without being cleared. The air conditioner 1 may include a notification unit in order to notify the user that the forced ventilation mode is continued even when the cooling operation stops at this time. The notification unit is, for example, the buzzer 13 of the indoor unit 10. The buzzer 13 sounds a warning to notify the user of the continuation of the forced ventilation mode. Alternatively, the operation terminal 60 may include such a buzzer. Still alternatively, the display unit 603 may display information on the continuation of the forced ventilation mode in order to notify the user of the continuation of the forced ventilation mode.

### (4) Features

(4-1)
The air conditioner 1 according to the first embodiment is capable of carrying out the normal air-conditioning operation including the automatic operation, the cooling operation, the dehumidifying operation, the air blowing operation, and the like. The air conditioner 1 has the forced ventilation mode in which the control unit 16 ventilates the room when the concentration of the predetermined gas in the room reaches or exceeds the predetermined value.

In carrying out the forced ventilation, the control unit 16 in the forced ventilation mode rotates the ventilation fan 54 and carries out the air-supplying operation or the exhausting operation to ventilate the room. The air-supplying operation involves introducing outside air into the room. The exhausting operation involves exhausting indoor air from the room.

In the forced ventilation, when the control unit 16 receives an instruction to start or stop the air-conditioning operation, then the control unit 16 continues the forced ventilation. Moreover, the control unit 16 starts or stops the air-conditioning operation, on the basis of the instruction.

As described above, the forced ventilation is higher in priority than the normal air-conditioning operation. Therefore, the concentration of the predetermined gas in the room is kept at a value equal to or less than the predetermined value irrespective of the operating status of the air-conditioning operation.

(4-2)
It is impossible for the user to press the operation button 61 for setting or clearing the forced ventilation mode only by one action of pressing the operation button 61. In other words, the user opens the cover 602 of the operation terminal 60 and then presses the operation button 61, thereby capable of issuing an instruction to set or clear the forced ventilation mode.

As described above, the concentration of the predetermined gas in the room is kept at a value equal to or less than the predetermined value so as to make the user less likely to clear the forced ventilation mode once set.

(4-3)
The operation terminal 60 according to the first embodiment includes the stop button 62 for stopping the normal air-conditioning operation including the automatic operation, the cooling operation, the heating operation, the dehumidifying operation, the air blowing operation, and the like. The forced ventilation mode is not cleared even when the stop button 62 is pressed.

Since the forced ventilation mode is not cleared even when the stop button 62 is pressed, the forced ventilation mode is continued irrespective of the stop of another air-conditioning operation. Therefore, the concentration of the predetermined gas in the room is kept at a value equal to or less than the predetermined value.

### (5) Modifications

### (5-1) Modification 1A

An operation terminal 60a according to Modification 1A is different from the operation terminal 60 according to the first embodiment. An air conditioner 1 according to Modification 1A is equal in configuration to the air conditioner 1 according to the first embodiment except the configuration of the operation terminal.

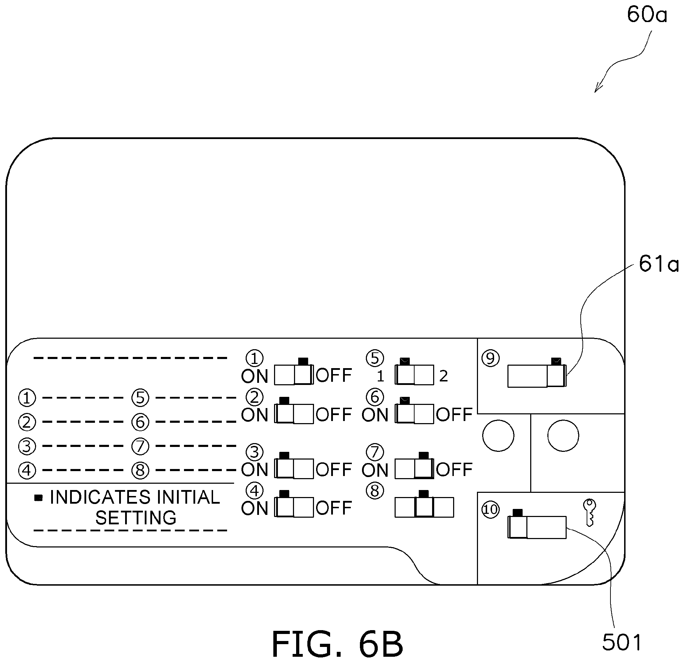

FIG. 6A illustrates a front surface of the operation terminal 60a according to Modification 1A. FIG. 6B illustrates a rear surface of the operation terminal 60a according to Modification 1A. First, a description will be given of the front surface. The front surface of the operation terminal 60a is separated into a left side 301 and a right side 302. The operation terminal 60a includes a cover 303 disposed on the right side 302. FIG. 6A illustrates a state in which the cover 303 is open. In a state in which the cover 303 is closed, the user is unable to access three knobs on the right side 302. The user is able to turn the knobs with the cover 303 opened. The knobs on the right side 302 enable normal air-conditioning operation switching among an automatic operation, a cooling operation, a heating operation, a dehumidifying operation, an air blowing operation, and the like, airflow volume adjustment, and air flowing direction adjustment. The operation terminal 60a also includes a display unit 603a, an operation start button, an operation stop button 62a, and the like each disposed on the left side 301.

Next, a description will be given of the rear surface of the operation terminal 60a. The operation terminal 60a also includes a cover that covers the entire rear surface. FIG. 6B illustrates a state in which the cover is removed from the operation terminal 60a. In other words, the user needs to remove the cover in order to manipulate buttons on the rear surface. The operation terminal 60a includes slide switches disposed on the rear surface. Among the slide switches, a switch 61a is provided for setting a forced ventilation mode. The switch 61a is slid left or right to clear or set the forced ventilation mode. In initial settings, the switch 61a is set to ON. Among the slide switches, a switch 501 serves as a lock switch for the other switches on the rear surface.

The operation terminal 60a according to Modification 1A is in the forced ventilation mode prior to the shipment at the factory. The user is unable to slide the switch 61a for clearing the forced ventilation mode unless the user performs multiple actions involving turning the operation terminal 60a inside out, removing the cover from the operation terminal 60a, and sliding the switch 61a.

In addition, the forced ventilation mode of the operation terminal 60a according to Modification 1A is not susceptible to an influence of manipulations on the operation start button, the operation stop button 62a, and the like on the front surface.

In the air conditioner 1 according to Modification 1A, therefore, the user is less likely to clear the forced ventilation mode, so that the forced ventilation mode is continued. A concentration of a predetermined gas in a room is thus kept at a value equal to or less than a predetermined value.

### (5-2) Modification 1B

The air conditioner 1 according to the first embodiment is not configured to carry out a humidifying operation. An air conditioner according to Modification 1B is configured to carry out the humidifying operation. The air conditioner according to Modification 1B includes an outdoor unit including a humidification unit in place of the ventilation unit 5 according to the first embodiment. The ventilation path 3, the ventilation pipe 35, and the like in the entire system are used in common in the humidifying operation and the ventilating operation.

The air conditioner according to Modification 1B carries out a normal air-conditioning operation including the humidifying operation. The air conditioner according to Modification 1B is similar in configuration to the air conditioner 1 according to the first embodiment except those described above.

### (5-3) Modification 1C

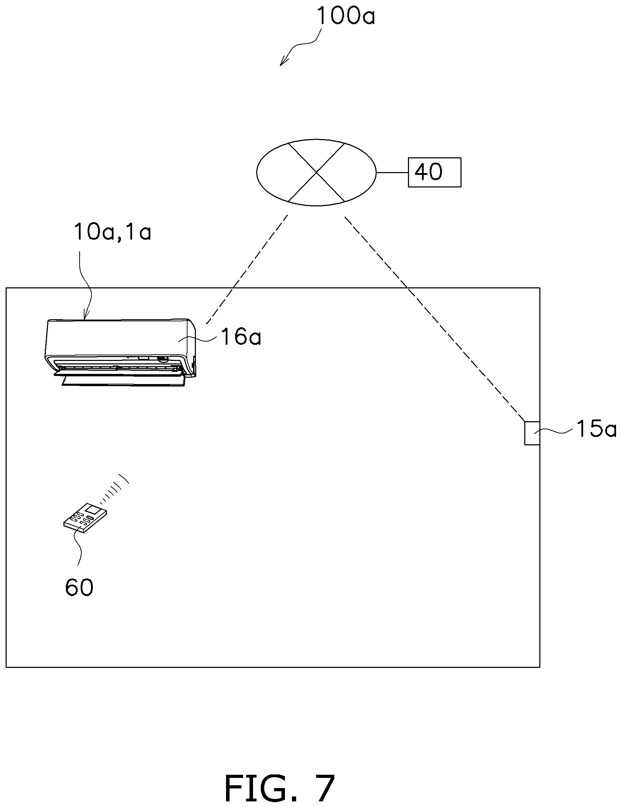

In the air-conditioning system 100 according to the first embodiment, the gas sensor 15 is installed separately from the indoor unit 10 and is capable of directly communicating with the first control unit 16a of the indoor unit 10. As illustrated in FIG. 7, in an air-conditioning system 100a according to Modification 1C, a gas sensor 15a is installed separately from an indoor unit 10a and is capable of communicating with a first control unit 16a of the indoor unit 10a via a network. The network may have thereon a server 40. The server 40 may be configured to accumulate measurement data acquired from the gas sensor 15a, to control the gas sensor 15a, and to transmit the measurement data to an air conditioner 1a.

Even when the air conditioner 1a according to Modification 1C especially has no function of connection to the gas sensor 15a, the air conditioner 1a is controllable using the measurement data acquired from the gas sensor 15a as long as the air conditioner 1a has a function of network connection.

### (5-4) Modification 1D

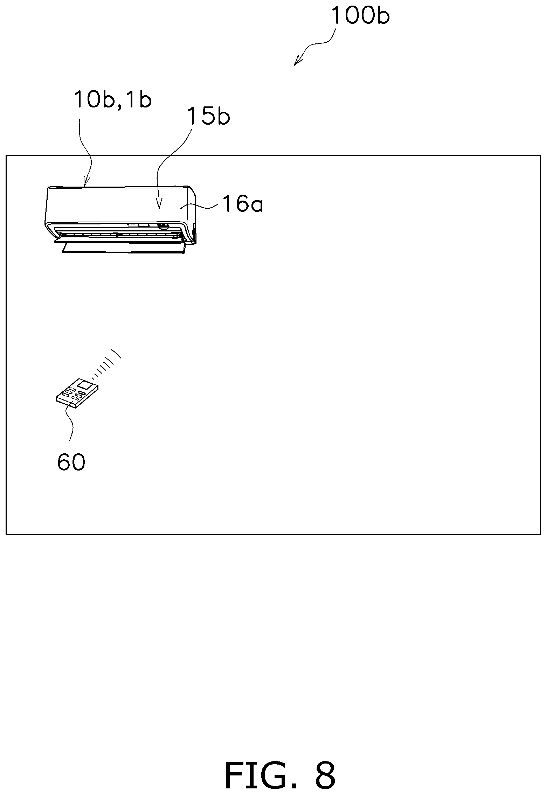

In the air-conditioning system 100 according to the first embodiment, the gas sensor 15 is installed separately from the indoor unit 10. Also in the air-conditioning system 100a according to Modification 1C, the gas sensor 15a is installed separately from the indoor unit 10a. As illustrated in FIG. 8, in an air conditioner 1b of Modification 1D, a gas sensor 15b is installed in a housing of an indoor unit 10b. In this case, there is almost no degree of freedom as to the installation of the gas sensor 15b in a room. However, the gas sensor 15b is connectable to a first control unit 16a with ease.

### (5-5) Modification 1E

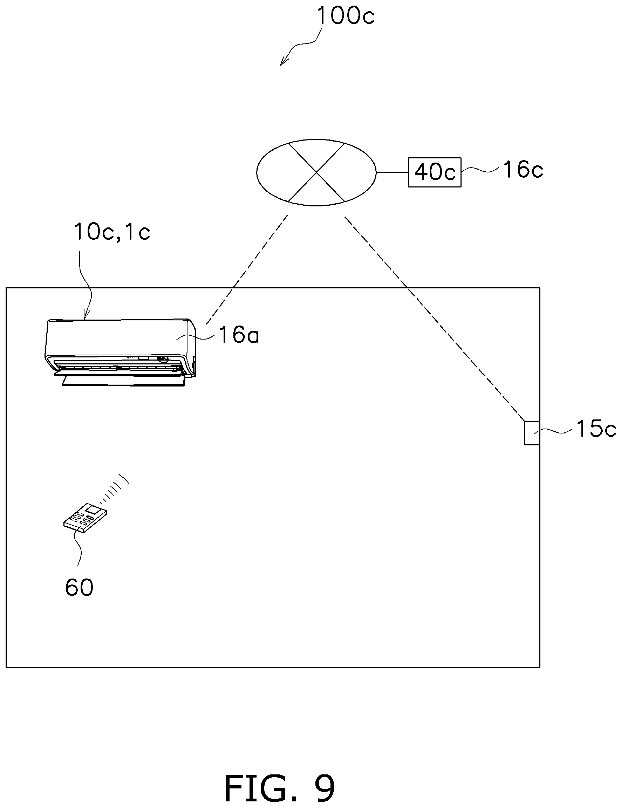

In an air-conditioning system 100c according to Modification 1E, a control unit 16 includes a third control unit 16c. As illustrated in FIG. 9, the third control unit 16c is provided in a server 40c. The server 40c is connectable to an air conditioner 1c and a gas sensor 15c via a network so as to communicate with the air conditioner 1c and the gas sensor 15c. The third control unit 16c controls a forced ventilation, on the basis of a concentration of a predetermined gas measured by the gas sensor 15c.

At this time, the third control unit 16c may directly control the air conditioner 1 or may cause a first control unit 16a or/and a second control unit 16b of the air conditioner 1 to control the air conditioner 1.

### (5-6) Modification 1F

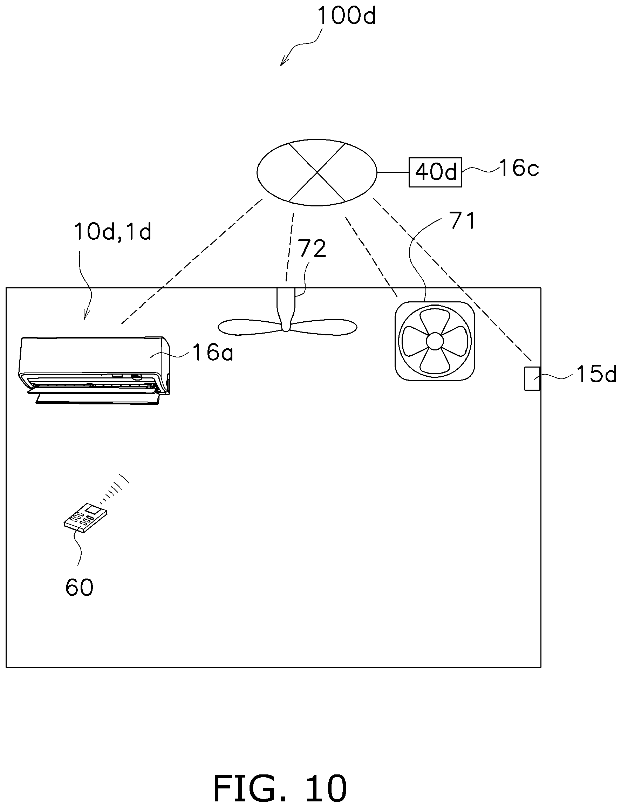

As illustrated in FIG. 10, an air-conditioning system 100d according to Modification 1F includes an air conditioner 1d, a gas sensor 15d, and a ventilator 71. The ventilator 71 is a ventilation fan. The ventilator 71 is configured to ventilate a room by discharging indoor air from the room. The air conditioner 1d is configured to carry out a normal air-conditioning operation. The air conditioner 1d does not necessarily include a ventilation path 3 constituted of a ventilation unit 5, a ventilation pipe 35, and the like.

The air conditioner 1d, the gas sensor 15d, and the ventilator 71 are connected to a network. A third control unit 16c is provided in a server 40d on the network. The third control unit 16c receives from the gas sensor 15d a concentration of a predetermined gas in the room. In carrying out a forced ventilation, the third control unit 16c controls the ventilator 71, on the basis of the concentration of the predetermined gas in the room.

As illustrated in FIG. 10, the air-conditioning system 100d according to Modification 1F may also include a circulator 72. The circulator 72 has a function of circulating indoor air and homogenizing a temperature of the indoor air, the concentration of the predetermined gas, and the like. The circulator 72 is connected to the network. The circulator 72 is controlled by the third control unit 16c of the server 40d.

The third control unit 16c controls the circulator 72, the ventilator 71, the gas sensor 15d, and the air conditioner 1 in an associated manner. For example, when outside air is taken into the room through the ventilator 71, a fan of the circulator 72 rotates to stir the indoor air. This configuration thus reduces an imbalance in concentration of CO₂ gas in the room.

### (5-7) Modification 1G

In the first embodiment, the gas sensor 15 is a CO₂ gas sensor as an example. The gas sensor may be a sensor for measuring other kinds of gas. According to Modification 1G, the gas sensor is a sensor for measuring a volatile organic compound (VOC). Examples of the VOC may include, but not limited to, formaldehyde, toluene, xylene, ethylbenzene, styrene, acetaldehyde, and a combination thereof.

The gas sensor may also be an indoor air quality (IAQ) sensor.

While various embodiments of the present disclosure have been described herein above, it is to be appreciated that various changes in form and detail may be made without departing from the spirit and scope of the present disclosure presently or hereafter claimed.

### REFERENCE SIGNS LIST

1, 1a, 1b: air conditioner
2: refrigerant circuit
3: ventilation path
5: ventilation unit
6: outdoor refrigerant circuit unit
10: indoor unit
13: buzzer (notification unit)
14: indoor heat exchanger
15: gas sensor
16, 16a, 16b: control unit
20: outdoor unit
35: ventilation pipe
54: ventilation fan
60, 60a: operation terminal
62, 62a: stop button
100, 100a: air-conditioning system

### CITATION LIST

### PATENT LITERATURE

Patent Literature 1: JP 2005-221107 A

## Claims

1. An air-conditioning system (100) comprising:
a ventilation fan (54) configured to ventilate a room;
a control unit (16) configured to control the ventilation fan; and
an operation terminal (60, 60a) configured to receive from a user a start instruction of an air-conditioning operation including at least one of an automatic air-conditioning operation, a cooling operation, a heating operation, a dehumidifying operation, a humidifying operation, and an air blowing operation, and to receive a start instruction of ventilating operation by the ventilation fan,
**characterized in that** the control unit is configured to automatically start a forced ventilation mode in which, in a non-operation period before the operation terminal receives a start instruction of the air-conditioning operation and before the air-conditioning operation is started, when a concentration of a predetermined gas in the room has a value equal to or more than a predetermined value, the ventilation fan is controlled to ventilate the room to reduce the concentration of the predetermined gas, and wherein
the control unit is further configured to continue the forced ventilation mode, even when the control unit receives a start instruction of the air-conditioning operation, and/or wherein the control unit is further configured to continue the forced ventilation mode, even when the control unit receives a stop instruction of the air-conditioning operation.

2. The air-conditioning system according to claim 1, wherein
in the forced ventilation mode, the control unit is configured to control to start the air-conditioning operation, when the operation terminal receives the start instruction of the air-conditioning operation.

3. The air-conditioning system according to claim 1 or 2, wherein
the control unit is configured to continue the forced ventilation, even when the control unit receives a stop instruction of the air-conditioning operation.

4. The air-conditioning system according to any one of claims 1 to 3, wherein
the ventilation fan (54) is configured to ventilate the room by supplying outside air into the room.

5. The air-conditioning system according to any one of claims 1 to 4, further comprising a notification unit (13), wherein
the control unit is configured to control the notification unit to notify the user of the continuation of the forced ventilation, when the operation terminal receives a start instruction of the air-conditioning operation.

6. The air-conditioning system according to any one of claims 1 to 5, wherein
the operation terminal includes a stop button (62, 62a) configured to be pressed once for stopping the air-conditioning operation, and wherein the control unit is configured to continue the forced ventilation even after the press of the stop button once

7. The air-conditioning system according to any one of claims 1 to 6, further comprising
a gas sensor (15) configured to measure the concentration of the predetermined gas in the room.

## Patentansprüche

1. Klimatisierungssystem (100), umfassend:
ein Lüftungsgebläse (54), das so konfiguriert ist, dass es einen Raum belüftet;
eine Steuereinheit (16), die so konfiguriert ist, dass sie das Lüftungsgebläse steuert; und
ein Bedienterminal (60, 60a), das so konfiguriert ist, dass es von einem Benutzer eine Startanweisung für einen Klimatisierungsbetrieb empfängt einschließlich mindestens eines automatischen Klimatisierungsbetriebs, eines Kühlbetriebs, eines Heizbetriebs, eines Entfeuchtungsbetriebs, eines Befeuchtungsbetriebs und eines Luftblasbetriebs, und dass es eine Startanweisung für einen Lüftungsbetrieb durch das Lüftungsgebläse empfängt,
**dadurch gekennzeichnet, dass** die Steuereinheit so konfiguriert ist, dass sie automatisch einen Zwangslüftungsmodus startet, bei dem in einer Nichtbetriebsperiode, bevor das Bedienterminal eine Startanweisung für den Klimatisierungsbetrieb empfängt und bevor der Klimatisierungsbetrieb gestartet wird, wenn eine Konzentration eines vorbestimmten Gases in dem Raum einen Wert aufweist, der gleich oder größer als ein vorbestimmter Wert ist, das Lüftungsgebläse so gesteuert wird, dass es den Raum belüftet, um die Konzentration des vorbestimmten Gases zu verringern, und wobei
die Steuereinheit weiter so konfiguriert ist, dass sie den Zwangslüftungsmodus fortsetzt, selbst wenn die Steuereinheit eine Startanweisung für den Klimatisierungsbetrieb empfängt, und/oder wobei die Steuereinheit weiter so konfiguriert ist, dass sie den Zwangslüftungsmodus fortsetzt, selbst wenn die Steuereinheit eine Stoppanweisung für den Klimatisierungsbetrieb empfängt.

2. Klimatisierungssystem nach Anspruch 1, wobei
in dem Zwangslüftungsmodus die Steuereinheit so konfiguriert ist, dass sie den Start des Klimatisierungsbetriebs steuert, wenn das Bedienterminal die Startanweisung für den Klimatisierungsbetrieb empfängt.

3. Klimatisierungssystem nach Anspruch 1 oder 2, wobei
die Steuereinheit so konfiguriert ist, dass sie die Zwangslüftung auch dann fortsetzt, wenn die Steuereinheit eine Stoppanweisung für den Klimatisierungsbetrieb empfängt.

4. Klimatisierungssystem nach einem der Ansprüche 1 bis 3, wobei
das Lüftungsgebläse (54) so konfiguriert ist, dass es den Raum durch Zufuhr von Außenluft in den Raum belüftet.

5. Klimatisierungssystem nach einem der Ansprüche 1 bis 4, weiter umfassend
eine Benachrichtigungseinheit (13), wobei die Steuereinheit so konfiguriert ist, dass sie die Benachrichtigungseinheit so steuert, dass sie den Benutzer über die Fortsetzung der Zwangslüftung benachrichtigt, wenn das Bedienterminal eine Startanweisung für den Klimatisierungsbetrieb empfängt.

6. Klimatisierungssystem nach einem der Ansprüche 1 bis 5, wobei
das Bedienterminal eine Stopptaste (62, 62a) einschließt, die so konfiguriert ist, dass sie zum Stoppen des Klimatisierungsbetriebs einmal gedrückt werden kann, und wobei die Steuereinheit so konfiguriert ist, dass sie die Zwangslüftung selbst nach dem einmaligen Drücken der Stopptaste fortsetzt.

7. Klimatisierungssystem nach einem der Ansprüche 1 bis 6, weiter umfassend
einen Gassensor (15), der so konfiguriert ist, dass er die Konzentration des vorbestimmten Gases in dem Raum misst.

## Revendications

1. Système (100) de climatisation comprenant :
un ventilateur (54) de ventilation configuré pour ventiler une pièce ;
une unité (16) de commande configurée pour commander le ventilateur de ventilation ; et
un terminal (60, 60a) de fonctionnement configuré pour recevoir en provenance d'un utilisateur une instruction de démarrage d'une opération de climatisation incluant au moins l'une d'une opération de climatisation automatique, d'une opération de refroidissement, d'une opération de chauffage, d'une opération de déshumidification, d'une opération d'humidification et d'une opération de soufflage d'air, et pour recevoir une instruction de démarrage d'une opération de ventilation par le ventilateur de ventilation,
**caractérisé en ce que** l'unité de commande est configurée pour démarrer automatiquement un mode de ventilation forcée dans lequel, au cours d'une période de non-fonctionnement avant que le terminal de fonctionnement ne reçoive une instruction de démarrage de l'opération de climatisation et avant que l'opération de climatisation ne soit démarrée, lorsqu'une concentration en un gaz prédéterminé dans la pièce a une valeur égale ou supérieure à une valeur prédéterminée, le ventilateur de ventilation est commandé pour ventiler la pièce afin de réduire la concentration en gaz prédéterminé, et dans lequel
l'unité de commande est en outre configurée pour maintenir le mode de ventilation forcée, même lorsque l'unité de commande reçoit une instruction de démarrage de l'opération de climatisation, et/ou dans lequel l'unité de commande est en outre configurée pour maintenir le mode de ventilation forcée, même lorsque l'unité de commande reçoit une instruction d'arrêt de l'opération de climatisation.

2. Système de climatisation selon la revendication 1, dans lequel
dans le mode de ventilation forcée, l'unité de commande est configurée pour commander le démarrage de l'opération de climatisation, lorsque le terminal de fonctionnement reçoit l'instruction de démarrage de l'opération de climatisation.

3. Système de climatisation selon la revendication 1 ou la revendication 2, dans lequel
l'unité de commande est configurée pour maintenir la ventilation forcée, même lorsque l'unité de commande reçoit une instruction d'arrêt de l'opération de climatisation.

4. Système de climatisation selon l'une quelconque des revendications 1 à 3, dans lequel
le ventilateur (54) de ventilation est configuré pour ventiler la pièce en fournissant de l'air extérieur dans la pièce.

5. Système de climatisation selon l'une quelconque des revendications 1 à 4, comprenant en outre
une unité (13) de notification, dans lequel l'unité de commande est configurée pour commander l'unité de notification afin de notifier à l'utilisateur le maintien de la ventilation forcée, lorsque le terminal de fonctionnement reçoit une instruction de démarrage de l'opération de climatisation.

6. Système de climatisation selon l'une quelconque des revendications 1 à 5, dans lequel
le terminal de fonctionnement inclut un bouton (62, 62a) d'arrêt configuré pour être actionné une fois pour arrêter l'opération de climatisation, et dans lequel l'unité de commande est configurée pour maintenir la ventilation forcée même après que le bouton d'arrêt a été actionné une fois.

7. Système de climatisation selon l'une quelconque des revendications 1 à 6, comprenant en outre
un capteur (15) de gaz configuré pour mesurer la concentration en gaz prédéterminé dans la pièce.
